(19) Europäisches Patentamt / European Patent Office / Office européen des brevets

(11) **EP 3 475 547 B1**

(12) **FASCICULE DE BREVET EUROPEEN**

(45) Date de publication et mention
de la délivrance du brevet:
**04.08.2021   Bulletin 2021/31**

(21) Numéro de dépôt: **17745400.6**

(22) Date de dépôt: **27.06.2017**

(51) Int Cl.:
**F02C 7/232** *(2006.01)*      **F02C 9/32** *(2006.01)*

(86) Numéro de dépôt international:
**PCT/FR2017/051713**

(87) Numéro de publication internationale:
**WO 2018/002511 (04.01.2018 Gazette 2018/01)**

(54) **CIRCUIT ET PROCÉDÉ DE DOSAGE DE CARBURANT À COMPENSATION DE VARIABILITÉ DE LA DENSITÉ DU CARBURANT**

SCHALTUNG UND VERFAHREN ZUM DOSIEREN VON KRAFTSTOFF MIT KOMPENSATION VON SCHWANKUNGEN DER KRAFTSTOFFDICHTE

CIRCUIT AND METHOD FOR METERING FUEL WITH COMPENSATION FOR VARIATIONS IN THE DENSITY OF THE FUEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.06.2016   FR 1655944**

(43) Date de publication de la demande:
**01.05.2019   Bulletin 2019/18**

(73) Titulaire: **Safran Aircraft Engines**
**75015 Paris (FR)**

(72) Inventeur: **PORA, Loïc**
**77550 Moissy-Crayamel (FR)**

(74) Mandataire: **Regimbeau**
**20, rue de Chazelles**
**75847 Paris Cedex 17 (FR)**

(56) Documents cités:
FR-A1- 2 806 488      FR-A1- 2 923 871
US-A- 2 917 067      US-A1- 2009 301 575

**Description**

DOMAINE DE L'INVENTION

L'invention concerne un circuit de dosage de carburant d'une turbomachine, et un procédé de dosage pouvant être mis en oeuvre par un tel circuit.

ETAT DE LA TECHNIQUE

Une turbomachine comprend classiquement un circuit de dosage de carburant comprenant un doseur de carburant, délivrant à la chambre de combustion de la turbomachine un débit de carburant adapté au régime de fonctionnement de la turbomachine. Un circuit de dosage de carburant d'une turbomachine selon l'art antérieur est connu dans le document US 2917067 A.

Le circuit de dosage comprend également une pompe qui prélève le carburant depuis le réservoir de carburant de la turbomachine, pour l'acheminer vers le doseur, ainsi qu'une soupape de régulation qui permet de faire recirculer vers la pompe un débit de carburant excédentaire fourni au doseur.

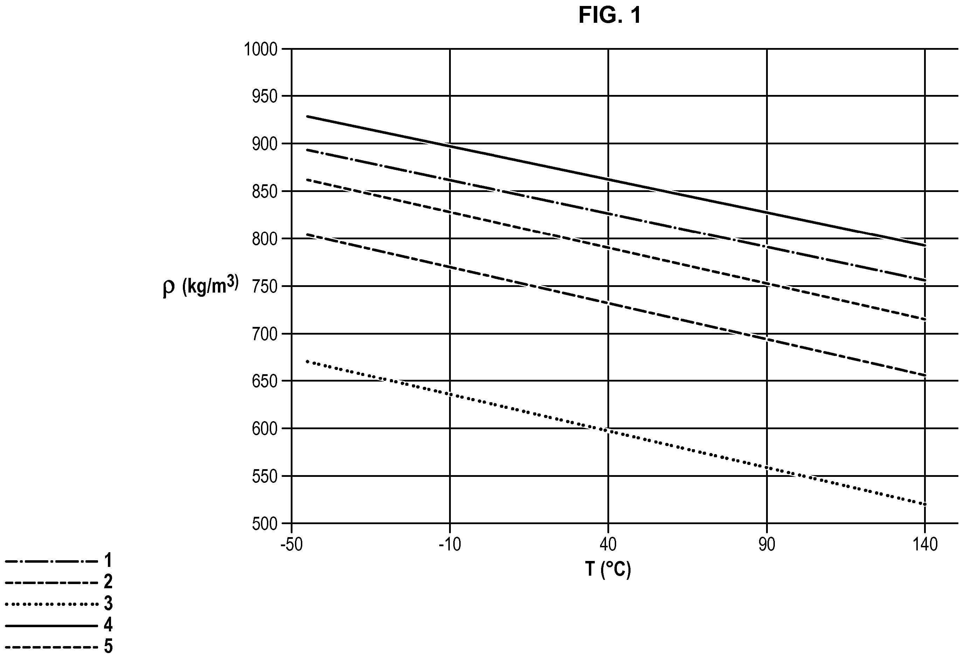

Chaque régime de fonctionnement de la turbomachine impose un débit massique de carburant correspondant qui doit être délivré par le doseur. En référence à la figure 1, on a représenté la densité de différents types de carburants (chaque courbe numérotée 1 à 4 correspondant à un carburant différent, la courbe numérotée 5 correspond à un exemple de dimensionnement du moteur) en fonction de la température. Il apparaît sur cette figure que la densité d'un carburant peut varier de façon importante, notamment en fonction du type de carburant utilisé (carburants plus ou moins volatiles) et de la température du carburant. Actuellement, les doseurs sont commandés à partir de lois de commande qui lient un débit massique cible désiré à une position du doseur, pour des conditions fixées de température, et de type de carburant.

Par conséquent ces lois de commande ne permettent pas de tenir compte de la variabilité de la densité du carburant dans la commande du doseur, et donc d'adapter précisément le débit massique dosé à la densité du carburant pour obtenir le débit massique cible.

En outre, il n'est pas possible de connaître précisément le débit massique délivré par le doseur car les débitmètres utilisés pour connaître la quantité de carburant délivrée par le doseur sont des débitmètres volumiques, les débitmètres massiques ne présentant pas une réactivité suffisante pour fournir une information fiable et adaptée à chaque instant au régime moteur de la turbomachine.

Il en résulte une imprécision importante, de l'ordre de 10%, sur le débit massique délivré par le doseur à la chambre de combustion de carburant.

Il est possible de calculer la part de l'imprécision dans le débit délivré par le doseur, qui résulte de la méconnaissance de la densité du carburant par la formule suivante exprimant le débit délivré :

$$Wf = K.S.\sqrt{\rho.\Delta P}$$

Avec:

- Wf le débit massique injecté par le doseur en kg/h
- $\rho$ la densité du carburant en kg/L
- K une constante, et
- S la section d'ouverture d'une fente du doseur en mm$^2$

L'impact de la densité sur le débit injecté est la suivante :

$$\frac{dWf}{Wf} = -\frac{1}{2}.\left(\frac{d\rho}{\rho}\right)$$

Une densité variant de 700 à 900 kg/m$^3$ crée une imprécision sur le débit massique injecté comprise entre -6.4 et 6.1%, par rapport à une loi calculée avec une densité moyenne de 803kg/m$^3$.

Or, cette imprécision impacte le dimensionnement de la turbomachine.

En particulier, un changement important de régime de la turbomachine, par exemple d'un régime de vitesse élevé à un régime de ralenti ou inversement, entraine une variation brusque du débit délivré à la chambre de combustion. Cette variation est opérée en moins de temps que la variation de la vitesse de rotation de la turbomachine. Des tolérances de fonctionnement, appelées marges au pompage et à l'extinction, doivent donc être définies pour que la turbomachine continue de fonctionner malgré un débit délivré différent du juste besoin nécessaire au fonctionnement et adapté à sa vitesse de rotation actuelle, ces tolérances étant obtenues par un surdimensionnement de la turbomachine.

Du fait de l'imprécision importante sur le débit délivré par le doseur, les tolérances ainsi que le surdimensionnement de la turbomachine doivent être encore plus importants.

Certaines solutions ont pu être proposées comprenant l'utilisation d'un capteur de température, combinée à un calculateur corrigeant la commande du doseur en fonction de lois de compensation établies en fonction de la densité ou de la température du carburant.

Cependant cette solution ne permet de corriger qu'une partie des écarts liés à la température, en ajoutant par ailleurs d'autres sources d'incertitudes liées à l'élaboration de la loi.

PRESENTATION DE L'INVENTION

L'invention a pour but de pallier les inconvénients de l'art antérieur, en proposant un système de dosage de carburant présentant une précision accrue sur le débit dosé par rapport à l'art antérieur.

En particulier, un but de l'invention est de proposer un système de dosage de carburant qui permet d'adapter le débit de carburant dosé en fonction de la densité du carburant.

A cet égard, l'invention a pour objet un circuit de dosage de carburant de turbomachine selon la revendication 1, comprenant :

- un doseur de carburant,
- une pompe adaptée pour faire circuler un débit de carburant vers le doseur, et
- une soupape de régulation adaptée pour renvoyer un débit excédentaire de carburant délivré au doseur vers la pompe en fonction d'une différence de pression de carburant aux bornes du doseur,

La soupape de régulation est adaptée pour moduler le débit excédentaire renvoyé vers la pompe en fonction de variations de la densité du carburant délivré au doseur.

Le circuit de dosage de carburant comprend en outre une ligne à haute-pression d'alimentation du doseur et une ligne à basse-pression de retour vers la pompe,

Ledit circuit comprend également :

- une ligne de prélèvement de débit qui relie la ligne à haute-pression à une chambre de la soupape de régulation, ladite ligne comprenant une pompe adaptée pour délivrer à ladite chambre un débit constant de carburant à une
- pression supérieure à la pression du carburant dans la ligne à haute-pression, et
- une ligne de renvoi du débit qui relie la chambre à une entrée de recirculation du carburant de la ligne haute pression, ladite ligne comprenant un diaphragme,
  lesdites lignes assurant l'alimentation de la chambre avec un débit de carburant constant dont la pression ne dépend que de la densité du carburant.

Le circuit comprend une ligne à haute-pression d'alimentation du doseur et une ligne à basse-pression de retour vers la pompe, et la soupape de régulation comprend :

    ○ un cylindre et un tiroir mobile en translation dans le cylindre,
    ○ un orifice d'entrée agencé dans le cylindre et relié à la ligne à haute-pression,
    ○ un orifice de sortie agencé dans le cylindre et relié à la ligne à basse-pression,

la soupape de régulation étant conformée de sorte qu'un déplacement du tiroir dans le cylindre entraine une variation du débit de carburant circulant de l'orifice d'entrée vers l'orifice de sortie,
le tiroir comprenant deux sections extrêmes de commande de déplacement, respectivement reliées à la ligne à haute-pression et à une sortie du doseur, et comprenant en outre une section supplémentaire de commande de déplacement adaptée pour moduler la position du tiroir en fonction de la densité du carburant. Notamment alors, la chambre de la soupape de régulation peut être délimitée par la section supplémentaire de commande de déplacement du tiroir, la pression de la chambre s'exerçant sur la section supplémentaire de commande de déplacement du tiroir.

Le cylindre présente en outre deux orifices débouchant dans la chambre, la ligne de prélèvement de débit reliant la ligne à haute-pression et l'un des deux orifices, tandis que la ligne de renvoi du débit relie l'autre orifice à la ligne à haute-pression.

Par ailleurs, la pompe peut être une pompe volumétrique.
L'invention a également pour objet une turbomachine, comprenant un circuit de dosage de carburant selon la description qui précède.

Selon un autre objet, l'invention se rapporte à un procédé de dosage de carburant, mis en oeuvre dans un circuit de dosage de carburant selon la description qui précède, le procédé de dosage comprenant l'alimentation du doseur de carburant avec un débit de carburant régulé en fonction d'une différence de pression de carburant aux bornes du doseur et en fonction de la densité du carburant.

Avantageusement, mais facultativement, lors du procédé de dosage de carburant, la régulation du débit de carburant alimentant le doseur comprend une recirculation d'un débit variable de carburant vers la pompe au moyen de la soupape de régulation, et le contrôle du débit recirculé comprend l'application, sur une section de commande de ladite soupape, d'une pression de carburant ne dépendant que de la densité du carburant.

L'invention proposée permet d'augmenter la précision du dosage du carburant par une modulation, en amont du doseur, du débit de carburant délivré au doseur en fonction de la densité du carburant.

La modulation proposée permet de réduire l'imprécision du dosage de carburant. En outre, la modulation est mise en oeuvre hydrauliquement au niveau d'une soupape de régulation. Elle simplifie l'électronique de commande du doseur.

DESCRIPTION DES FIGURES

D'autres caractéristiques, buts et avantages de l'invention ressortiront de la description qui suit, qui est purement illustrative et non limitative, et qui doit être lue en regard des dessins annexés, sur lesquels :

- la figure 1, déjà décrite, représente la variation de densité de plusieurs carburants en fonction de la température.
- La figure 2 représente schématiquement un circuit de dosage selon un mode de réalisation de l'invention.
- La figure 3 représente l'impact sur la précision du dosage de la modulation de débit mise en oeuvre par la soupape de régulation en fonction de la densité de carburant.

DESCRIPTION DETAILLEE D'AU MOINS UN MODE DE REALISATION

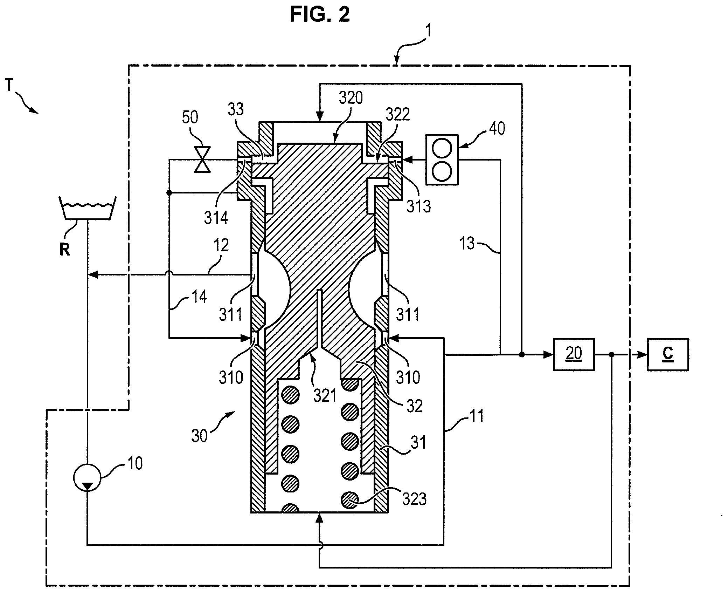

En référence à la figure 2, on a représenté un circuit de dosage 1 de carburant d'une turbomachine T, comportant au moins une chambre de combustion C et un réservoir de carburant R.

Le circuit de dosage de carburant 1 comporte une pompe volumétrique 10, un doseur 20, et une ligne d'alimentation du doseur 11 dite à haute-pression, reliant la sortie de la pompe volumétrique 10 à l'entrée du doseur 20. Le doseur 20 est adapté pour délivrer un débit massique cible à la chambre de combustion C à partir d'un débit initial qui lui est délivré par la pompe volumétrique 10 via la ligne 11.

Le circuit de dosage de carburant 1 comporte en outre une soupape de régulation 30, adaptée pour réguler le débit délivré au doseur 20. En particulier, la soupape de régulation 30 est adaptée pour renvoyer un débit excédentaire de carburant parvenant au doseur 20 en entrée de la pompe volumétrique 10, en fonction de la différence de pression aux bornes du doseur 20.

Pour ce faire, la soupape de régulation 30 comprend un cylindre 31 et un tiroir 32 mobile en translation dans le cylindre 31.

Le tiroir 32 comprend à ses extrémités deux sections de commande de déplacement 320, 321, qui permettent de commander la position du tiroir dans le cylindre. Une première section de commande 320 est reliée à la ligne 11 à haute-pression. Elle reçoit donc un débit de carburant à la même pression que le carburant délivré en entrée du doseur 20.

Une deuxième section de commande 321 est reliée à une sortie du doseur.

De plus, le cylindre 31 comprend un premier orifice d'entrée 310 relié à la ligne 11 à haute pression, et un deuxième orifice de sortie 311 relié à une ligne 12 de retour à basse-pression, cette ligne reliant l'orifice 311 à l'entrée de la pompe volumétrique 10. Par orifice, on entend une ouverture d'évacuation mettant en communication une cavité interne de la soupape 30 avec une ligne de circulation de carburant, quelle que soit la géométrie de l'ouverture. Par exemple, un orifice peut s'étendre sur tout ou partie de la circonférence du cylindre.

Le tiroir 32 est en outre conformé pour, en fonction de sa position dans le cylindre, sélectivement autoriser ou interdire une communication de fluide entre les orifices 311 et 310, et moduler le débit de fluide circulant depuis la ligne 11 vers la ligne 12 en passant par les orifices 310 et 311 de la soupape 30, lorsque ladite communication de fluide est autorisée.

En particulier, un accroissement de la pression de carburant appliquée à la première section de commande 320 entraîne un déplacement du cylindre vers la section opposée (sur la figure 2, vers le bas), qui tend à libérer au moins l'un des orifices pour accroître le débit recirculé vers la ligne 12.

De plus, la soupape de régulation comprend avantageusement un organe de rappel 323, par exemple un ressort s'exerçant en appui contre la deuxième section de commande 321, afin de ramener le tiroir dans une position d'équilibre lorsque la pression appliquée à la première section de commande diminue.

Ceci permet de réguler le débit en amont du doseur en fonction du différentiel de pression de carburant aux bornes du doseur.

La soupape de régulation de carburant 30 est en outre adaptée pour moduler le débit de carburant recirculé vers la pompe 10 en fonction de la densité du carburant, afin de permettre une prise en compte, au plus près du doseur, de la variabilité de densité de carburant et de diminuer une imprécision sur le dosage de carburant délivré à la chambre de combustion.

Pour ce faire, le tiroir 32 de la soupape de régulation de carburant 30 comprend en outre une section supplémentaire de commande 322, qui commande également la position du tiroir 32 dans le cylindre.

A l'intérieur du cylindre 31 de la soupape est définie une chambre, adjacente à la section supplémentaire de commande 322. La chambre est délimitée sur un côté par cette section supplémentaire, de sorte que la pression de fluide contenue par la chambre 33 puisse s'exercer sur la section supplémentaire de commande 322.

De plus le cylindre 31 comprend deux orifices supplémentaires 313, 314, les orifices débouchant dans ladite chambre 33.

Le circuit de dosage de carburant 1 comprend en outre une ligne de prélèvement de débit 13, dont une extrémité amont est reliée à la ligne 11 à haute-pression, et une extrémité aval est reliée à l'un des orifices 313.

La ligne de prélèvement de débit 13 comprend une pompe 40 adaptée pour délivrer à la chambre 33, via l'orifice 313, un débit constant de carburant prélevé sur la ligne 11 à haute-pression. La pression de carburant délivrée par la pompe 40 est donc supérieure à la pression du carburant dans la ligne 11 à haute-pression.

Pour assurer un prélèvement de débit constant, la pompe 40 est une pompe volumétrique, dont la technologie sera choisie de manière à avoir un rendement volumétrique très important et être peu sensible au vieillissement.

Le circuit de dosage de carburant 1 comprend en outre une ligne de renvoi 14 du débit, dont une extrémité amont est reliée à l'autre orifice 314, et une extrémité aval est reliée à la ligne 11 à haute-pression. Dans un mode de réalisation, l'extrémité aval de la ligne 14 de renvoi est reliée directement à l'orifice d'entrée 310 pour la recirculation de carburant.

La ligne de renvoi 14 comprend en outre un diaphragme 50, de géométrie connue.

La pression de carburant en sortie du diaphragme est égale à la pression dans la ligne 11 à haute-pression.

Par conséquent, la pression en entrée du diaphragme est égale à la pression en sortie additionnée de la perte de charges induite par le diaphragme sur le débit de carburant.

Or, la perte de charges induite par le diaphragme est formulée comme suit :

$$\frac{1}{2}\rho\xi\upsilon^2$$

Où p est la densité du fluide, $\xi$ est le coefficient de perte de charge du diaphragme, qui est une constante, et v est la vitesse d'écoulement du carburant dans le diaphragme, qui dépend du débit en amont et de la géométrie du diaphragme (constante).

Le fait que le débit en amont du diaphragme soit constant car il s'agit du débit prélevé par la pompe 40 implique que la perte de charges ne dépend que de la densité du carburant.

Par conséquent, la pression en sortie du diaphragme étant imposée, il en résulte que la pression en entrée du diaphragme varie uniquement en fonction de la densité de carburant.

Or, la pression du carburant dans la chambre 33 s'exerce sur la section supplémentaire de commande 322. Par conséquent, à la régulation de la position du tiroir dans le cylindre en fonction de la différence de pression aux bornes du doseur 20 s'ajoute une régulation en fonction des variations de densité du carburant.

Il en résulte que le débit qui est délivré au doseur 20 est déjà adapté pour accommoder les variations de densité du carburant, et que ces variations n'impactent plus le débit massique dosé par le doseur.

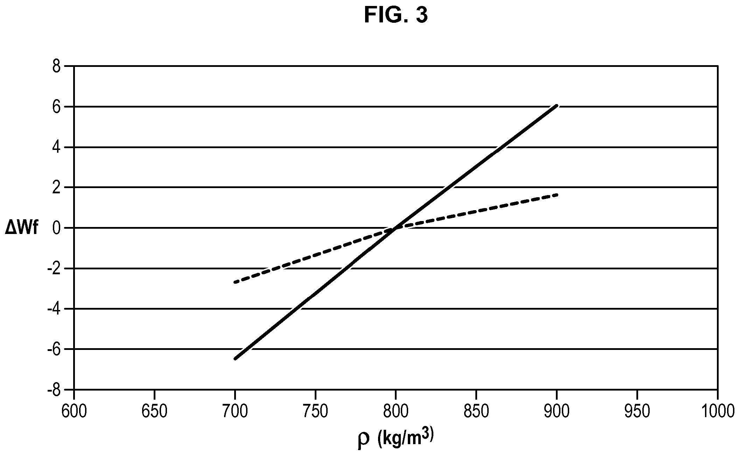

En référence à la figure 3, on a représenté une modélisation, sur un matériel existant, réalisée au moyen du logiciel AMESim® estimant l'impact d'une variation de densité de carburant entre 700 et 900 kg/m$^3$ sur la précision de dosage du doseur, respectivement avec et sans la régulation décrite précédemment. En abscisse est représentée la densité p du carburant et en ordonnée la variation $\Delta$Wf, en pourcentage, du débit Wf dosé par rapport au débit pour une densité p = 800 kg/m$^3$. La courbe en trait plein correspond à une absence de régulation et la courbe en trait pointillé est obtenue avec la régulation.

On constate qu'en l'absence de régulation, la variation de densité entraîne une variation de débit de -6.4% à 6.1% tandis qu'avec la régulation, la variation de débit est comprise entre -2.7% et +1.6%. La régulation du débit délivré au doseur en fonction de la variabilité de la densité de carburant permet donc de diminuer de plus de 30% l'imprécision sur le débit injecté. Cette régulation est de plus mise en oeuvre de manière automatique, sans rajouter de matériel électronique augmentant la complexité de la commande du doseur.

## Revendications

1. Circuit de dosage de carburant (1) de turbomachine, comprenant :

   - un doseur (20) de carburant,
   - une pompe (10) adaptée pour faire circuler un débit de carburant vers le doseur (20), et
   - une soupape de régulation (30) adaptée pour renvoyer un débit excédentaire de carburant délivré au doseur vers la pompe (10) en fonction d'une différence de pression de carburant aux bornes du doseur (20),

   la soupape de régulation (30) étant adaptée pour moduler le débit excédentaire renvoyé vers la pompe (10) en fonction de variations de la densité du carburant délivré au doseur (20),
   ledit circuit de dosage de carburant comprenant en outre une ligne à haute-pression (11) d'alimentation du doseur (20) et une ligne à basse-pression (12) de retour vers la pompe (10),
   **caractérisé en ce qu'**il comprend également :

   - une ligne de prélèvement de débit (13) qui relie la ligne à haute-pression (11) à une chambre (33) de la soupape de régulation, ladite ligne comprenant une pompe (40) adaptée pour délivrer à ladite chambre (33) un débit constant de carburant à une pression supérieure à la pression du carburant dans la ligne à haute-pression (11), et
   - une ligne de renvoi (14) du débit qui relie la chambre (33) à une entrée de recirculation du carburant de la ligne haute pression, ladite ligne comprenant un diaphragme (50),

   lesdites lignes assurant l'alimentation de la chambre (33) avec un débit de carburant constant dont la pression ne dépend que de la densité du carburant, et dans lequel la soupape de régulation (30) comprend :

   - un cylindre (31) et un tiroir (32) mobile en translation dans le cylindre,
   - un orifice d'entrée (310) agencé dans le cylindre (31) et relié à la ligne à haute-pression (11),
   - un orifice de sortie (311) agencé dans le cylindre (31) et relié à la ligne à basse-pression (12), la soupape de régulation (30) étant conformée de sorte qu'un déplacement du tiroir (32) dans le cylindre (31) entraine une variation du débit de carburant circulant de l'orifice d'entrée (310) vers l'orifice de sortie (311),

le tiroir comprenant deux sections extrêmes (320, 321) de commande de déplacement, respectivement reliées à la ligne à haute-pression (11) et à une sortie du doseur (20), et comprenant en outre une section supplémentaire (322) de commande de déplacement adaptée pour moduler la position du tiroir en fonction de la densité du carburant.

2. Circuit de dosage selon la revendication 1, dans lequel la chambre (33) de la soupape de régulation est délimitée par la section supplémentaire de commande (322) de déplacement du tiroir, la pression de la chambre (33) s'exerçant sur la section supplémentaire de commande (322) de déplacement du tiroir.

3. Circuit de dosage selon la revendication 1 ou la revendication 2, dans lequel le cylindre (31) présente deux orifices (313, 314) débouchant dans la chambre (33),
la ligne de prélèvement de débit (13) reliant la ligne à haute-pression (11) et l'un des deux orifices (313), tandis que la ligne de renvoi (14) du débit reliant l'autre orifice (314) à la ligne à haute-pression (11).

4. Circuit de dosage de carburant selon la revendication 1, dans lequel la pompe (40) de la ligne de prélèvement de débit est une pompe volumétrique.

5. Turbomachine (T), comprenant un circuit de dosage (1) de carburant selon l'une des revendications précédentes.

6. Procédé de dosage de carburant, mis en oeuvre dans un circuit de dosage de carburant selon l'une des revendications 1 à 4,
le procédé de dosage comprenant l'alimentation du doseur (20) de carburant avec un débit de carburant régulé en fonction d'une différence de pression de carburant aux bornes du doseur (20) et en fonction de la densité du carburant.

7. Procédé de dosage de carburant selon la revendication 6, dans lequel la régulation du débit de carburant alimentant le doseur comprend une recirculation d'un débit variable de carburant vers la pompe (10) au moyen de la soupape de régulation (30), et le contrôle du débit recirculé comprend l'application, sur une section de commande de ladite soupape, d'une pression de carburant ne dépendant que de la densité du carburant.

**Patentansprüche**

1. Kraftstoffdosierkreis (1) einer Turbomaschine, umfassend:

- einen Kraftstoffdosierer (20),
- eine Pumpe (10), die eingerichtet ist, um eine Kraftstoffmenge zum Dosierer (20) zu befördern, und
- ein Regulierventil (30), das zum Zurückschicken einer dem Dosierer bereitgestellten überschüssigen Kraftstoffmenge zu der Pumpe (10) in Abhängigkeit einer Druckdifferenz des Kraftstoffs an den Anschlüssen des Dosierers (20) geeignet ist,

wobei das Regulierventil (30) zum Modulieren der zur Pumpe (10) zurückgeschickten überschüssigen Menge in Abhängigkeit von Variationen der Dichte des dem Dosierer (20) bereitgestellten Kraftstoffs geeignet ist,
wobei der Kraftstoffdosierkreis ferner eine Hochdruck-Versorgungsleitung (11) des Dosierers (20) und eine Niederdruck-Rückleitung (12) zu der Pumpe (10) umfasst, **dadurch gekennzeichnet, dass** er ebenfalls umfasst:

- eine Mengenentnahmeleitung (13), die die Hochdruckleitung (11) mit einer Kammer (33) des Regulierventils verbindet, wobei die Leitung eine Pumpe (40) umfasst, die geeignet ist, der Kammer (33) eine konstante Kraftstoffmenge mit einem Druck bereitzustellen, der höher als der Druck des Kraftstoffs in der Hochdruckleitung (11) ist, und
- eine Mengenrückflussleitung (14), die die Kammer (33) mit einem Rezirkulationseinlass des Kraftstoffs der Hochdruckleitung verbindet, wobei die Leitung ein Diaphragma (50) umfasst,

wobei die Leitungen die Versorgung der Kammer (33) mit einer konstanten Menge an Kraftstoff gewährleisten, dessen Druck nur von der Dichte des Kraftstoffs abhängt, und
wobei das Regulierventil (30) umfasst:

- einen Zylinder (31) und einen in dem Zylinder translatorisch beweglichen Schieber (32),
- eine Einlassöffnung (310), die in dem Zylinder (31) eingerichtet und mit der Hochdruckleitung (11) verbunden ist,
- eine Auslassöffnung (311), die in dem Zylinder (31) eingerichtet und mit der Niederdruckleitung (12) verbunden ist,
wobei das Regulierventil (30) derart ausgebildet ist, dass eine Verlagerung des Schiebers (32) in dem Zylinder (31) zu einer Schwankung der Kraftstoffmenge führt, die von der Einlassöffnung (310) zu der Auslassöffnung (311) befördert wird,
wobei der Schieber zwei extreme Verlagerungs-Steuerabschnitte (320, 321) umfasst, die jeweils mit der Hochdruckleitung (11) und mit einem Auslass des Dosieres (20) verbunden sind, und ferner einen zusätzlichen Verlagerungs-Steuerabschnitt (322) umfasst, der zum Modulieren der Position des Schiebers in Abhängigkeit von der Dichte des Kraftstoffs geeignet ist.

2. Dosierkreis nach Anspruch 1, wobei die Kammer (33) des Regulierventils durch den zusätzlichen Verlagerungs-Steuerabschnitt (322) des Schiebers begrenzt ist, wobei der Druck der Kammer (33) auf den zusätzlichen Verlagerungs-Steuerabschnitt (322) des Schiebers ausgeübt wird.

3. Dosierkreis nach Anspruch 1 oder Anspruch 2, wobei der Zylinder (31) zwei Öffnungen (313, 314) aufweist, die in die Kammer (33) ausmünden, wobei die Mengenentnahmeleitung (13) die Hochdruckleitung (11) und eine der zwei Öffnungen (313) verbindet, wohingegen die Mengenrückflussleitung (14) die andere Öffnung (314) mit der Hochdruckleitung (11) verbindet.

4. Kraftstoffdosierkreis nach Anspruch 1, wobei die Pumpe (40) der Mengenentnahmeleitung eine volumetrische Pumpe ist.

5. Turbomaschine (T), umfassend einen Kraftstoffdosierkreis (1) nach einem der vorangehenden Ansprüche.

6. Kraftstoffdosierverfahren, das in einem Kraftstoffdosierkreis nach einem der Ansprüche 1 bis 4 durchgeführt wird, wobei das Dosierverfahren die Versorgung des Kraftstoffdosierers (20) mit einer Kraftstoffmenge umfasst, die in Abhängigkeit von einer Druckdifferenz des Kraftstoffs an den Anschlüssen des Dosierers (20) und in Abhängigkeit von der Dichte des Kraftstoffs reguliert wird.

7. Kraftstoffdosierverfahren nach Anspruch 6, wobei die Regulierung der Menge des Kraftstoffs, die den Dosierer versorgt, eine Rezirkulation einer variablen Kraftstoffmenge zu der Pumpe (10) mittels des Regulierventils (30) umfasst und die Kontrolle der rezirkulierten Menge die Anwendung, auf einem Steuerbereich des Ventils, eines Kraftstoffdrucks umfasst, der nur von der Dichte des Kraftstoffs abhängt.

**Claims**

1. Fuel metering circuit (1) for turbomachine, comprising:

   - a fuel metering element (20),
   - a pump (10) adapted to circulate a fuel flow towards the metering element (20), and

   - a control valve (30) adapted to return, towards the pump (10), an excess fuel flow delivered to the metering element, as a function of a difference in fuel pressure at the terminals of the metering element (20),

   the control valve (30) being adapted to modulate the excess flow returned towards the pump (10) as a function of variations in fuel density delivered to the metering element (20),
   said fuel metering circuit further comprising a high-pressure line (11) for feeding the metering element (20) and a low-pressure line (12) for returning to the pump (10),

   **characterized in that** it also comprises:

   - a flow extraction line (13) connecting the high-pressure line (11) to a chamber (33) of the control valve, said line comprising a pump (40) adapted to deliver to said chamber (33) a constant fuel flow at a pressure higher than the pressure of the fuel in the high-pressure line (11), and
   - a flow return line (14) connecting the chamber (33) to a fuel recirculation inlet of the high-pressure line, said line comprising a diaphragm (50),

   said lines ensuring the feeding of the chamber (33) with a constant fuel flow the pressure of which is solely dependent on the fuel density, and wherein the control valve (30) comprises:

   - a cylinder (31) and a slide gate (32) mobile in translation within the cylinder,
   - an inlet orifice (310) arranged in the cylinder (31) and connected to the high-pressure line (11),
   - an outlet orifice (311) arranged in the cylinder (31) and connected to the low-pressure line (12), the control valve (30) being conformed so that movement of the slide gate (32) in the cylinder (31) causes a variation in the fuel flow circulating from the inlet orifice (310) to the outlet orifice (311),
   the slide gate comprising two movement-controlling end sections (320, 321), respectively connected to the high-pressure line (11) and to an outlet of the metering element (20), and further comprising an additional movement-controlling section (322) adapted to modulate the position of the slide gate as a function of the fuel density.

2. The metering circuit according to claim 2, wherein the chamber (33) of the control valve is delimited by the additional movement-controlling section (322) of the slide gate, the pressure of the chamber (33) being exerted on the additional movement-controlling section (322) of the slide gate.

3. The metering circuit according to claim 2 or claim 3, wherein the cylinder (31) has two orifices (313, 314) opening into the chamber (33), the flow extraction line (13) connecting the high-pressure line (11) and one of the two orifices (313), whilst the flow return line (14) connects the other orifice (314) to the high-pressure line (11).

4. The fuel metering circuit according to claim 1, wherein the pump (40) of the flow extraction line is a displacement pump.

5. Turbomachine (T), comprising a fuel metering circuit (1) according to one of the preceding claims.

6. Fuel metering method implemented in a fuel metering circuit according to one of claims 1 to 4, the metering method comprising the feeding of the fuel metering element (20) with a regulated fuel flow rate as a function of a difference in fuel pressure at the terminals of the metering element (20) and as a function of the fuel density.

7. Fuel metering method according to claim 6, wherein the controlling of the fuel flow feeding the metering element comprises recirculation of a variable fuel flow towards the pump (10) by means of the control valve (30), and the controlling of the recirculated flow comprises the application, on a control section of said valve, of a fuel pressure solely dependent on the fuel density.

FIG. 1

EP 3 475 547 B1

FIG. 2

EP 3 475 547 B1

FIG. 3

EP 3 475 547 B1

**EP 3 475 547 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2917067 A